# EUROPEAN PATENT APPLICATION

(11) **EP 4 708 555 A1**
(43) Date of publication of application: **11.03.2026**
(21) Application number: 24852926.5
(22) Date of filing: 19.08.2024
(51) Int. Cl.: H01M 50/593, H01M 50/586

(54) **INSULATION STRUCTURE AND BATTERY**

(30) Priority: 17.06.2024 CN 202421388446 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: WU, Xueyin, Huizhou, Guangdong 516039 (CN); SHU, Kuanjin, Huizhou, Guangdong 516039 (CN); DUAN, Dong, Huizhou, Guangdong 516039 (CN); LIU, Ziwen, Huizhou, Guangdong 516039 (CN)
(74) Representative: Berggren Oy
(86) International application number: PCT/CN2024/113101
(87) International publication number: WO 2025/260488

(57) **Abstract**

The present disclosure provides an insulation structure and a battery. The insulation structure includes an insulation body and a baffle. The baffle is provided on at least one side of the insulation body in the width direction. The baffle is rotatably connected to the insulation body, with the rotation axis of the baffle extending in the length direction of the insulation body. The baffle includes a baffle body and a connecting portion that are connected to each other. The baffle body extends in the length direction of the insulation body. The connecting portion is rotatably connected to the insulation body, and the baffle body is separately provided from the insulation body.

## Description

This application claims priority to Chinese patent application No. 202421388446.1 filed with China National Intellectual Property Administration on June 17, 2024, the entire content of the aforementioned application is incorporated herein by reference.

### TECHNICAL FIELD

The present disclosure relates to the field of battery technology, in particular, to an insulation structure and a battery.

### BACKGROUND

A battery generally includes a cell, a casing, a cover plate, an insulation structure, tabs, and a post. The cover plate is sealed on the casing, forming a protective housing together with the casing, and the cell is accommodated inside the protective housing. The insulation structure is used to isolate the cover plate from the cell. The post typically penetrates through the cover plate and the insulation structure to lead the positive and negative poles of the cell out of the protective housing. In the related art, to prevent short circuits caused by contact between the cell tabs and the inner wall of the casing when the cell tabs are bent, a bendable baffle is provided in the insulation structure to isolate the cell tabs from the casing. However, the baffle in the related art generates significant stress concentration when bent, thereby affecting the stability of the insulation structure itself, and consequently affecting the overall performance of the battery.

### SUMMARY

The embodiments of the present disclosure provide an insulation structure and a battery that can improve the technical problem of stress concentration generated by the baffle when isolating the cell tabs from the battery casing.

In a first aspect, the embodiments of the present disclosure provide an insulation structure, which includes:
an insulation body, used to isolate a cover plate from a cell in a battery; the insulation body including a first surface and a second surface that are opposite to each other, the first surface used to connect with the cover plate, and the second surface used to face the cell;
a baffle, provided on at least one side of the insulation body in a width direction, the baffle rotatably connected to the insulation body, and a rotation axis of the baffle extending in a length direction of the insulation body;
where the baffle includes a baffle body and a connecting portion that are connected to each other, the baffle body extends in the length direction of the insulation body to isolate tabs of the cell from a casing of the battery, the connecting portion is rotatably connected to the insulation body, and the baffle body is separately provided from the insulation body.

In a second aspect, the embodiments of the present disclosure provide a battery, which includes:
a casing, configured with an accommodating cavity;
a cover plate, connected to the casing, with a through hole provided on the cover plate that communicates with the accommodating cavity;
the insulation structure mentioned in any of the above, the insulation structure located on a side of the cover plate facing the accommodating cavity, the insulation structure connected to the cover plate; the baffle in the insulation structure bent towards the accommodating cavity relative to the insulation body;
a post, connected to the cover plate, the post sequentially passing through the through hole and an installation hole on the insulation body;
a cell, located inside the accommodating cavity, tabs of the cell electrically connected to the post, and the tabs of the cell located on a side of the baffle away from the casing.

### BENEFICIAL EFFECT

In the embodiments of the present disclosure, the insulation structure includes an insulation body and a baffle. The insulation body is used to isolate the cover plate from the cell in the battery. The insulation body includes a first surface and a second surface that are opposite to each other, the first surface is used to connect with the cover plate, and the second surface is used to face the cell. The baffle is provided on at least one side of the insulation body in a width direction, and the baffle is rotatably connected to the insulation body, with a rotation axis of the baffle extending in a length direction of the insulation body. Herein, the baffle includes a baffle body and a connecting portion that are connected to each other, the baffle body extends in the length direction of the insulation body to isolate tabs of the cell from a casing of the battery, the connecting portion is rotatably connected to the insulation body, and the baffle body is separately provided from the insulation body. The present disclosure, by providing the baffle on at least one side of the insulation body in the width direction and using the rotatable connection between the baffle and the insulation body to isolate the cell tabs from the battery casing, reduces the risk of short circuits caused by contact between the cell tabs and the battery casing when the cell tabs are bent. At the same time, the present disclosure, by separating the baffle body of the baffle from the insulation body and only using the connecting portion to connect with the insulation body, can reduce the stress generated when the baffle is bent relative to the insulation body, as well as the stress generated when the cell tabs squeeze the baffle in a bent state, thereby helping to ensure the structural stability of the insulation structure during use.

### BRIEF DESCRIPTION OF THE DRAWINGS

FIG. 1 is a three-dimensional structural diagram of an insulation structure provided by the embodiment of the present disclosure;
FIG. 2 is an enlarged structural diagram of area A in FIG. 1 provided by the embodiment of the present disclosure;
FIG. 3 is a top view structural diagram of an insulation structure provided by the embodiment of the present disclosure;
FIG. 4 is a front view structural diagram of an insulation structure provided by the embodiment of the present disclosure;
FIG. 5 is an enlarged structural diagram of area B in FIG. 4 provided by the embodiment of the present disclosure;
FIG. 6 is a three-dimensional structural diagram of an insulation structure from another perspective provided by the embodiment of the present disclosure;
FIG. 7 is a partial structural diagram of a battery provided by the embodiment of the present disclosure.

### Reference Numerals:

10, battery;
100, insulation structure; 110, insulation body; 111, first surface; 112, second surface; 113, snap groove; 114, installation hole; 115, groove; 120, baffle; 121, connecting portion; 122, baffle body; 123, snap portion ; 1231, connecting sub-portion; 1232, snap sub-portion; 130, bending area; 140, reinforcing rib; a, rotation axis; x, length direction; y, width direction; z, thickness direction;
200, casing; 210, accommodating cavity;
300, cover plate; 310, through hole;
400, post;
500, cell; 510, tab; 511, protruding portion.

### DETAILED DESCRIPTION

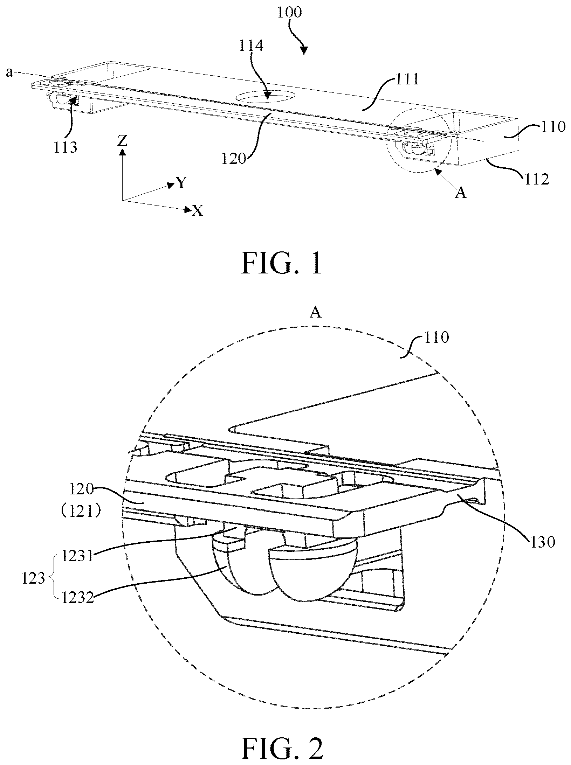

The embodiments of the present disclosure provide an insulation structure, as shown in FIGS. 1 and 2, the insulation structure 100 includes an insulation body 110. The insulation body 110 is used to isolate the cover plate 300 from the cell 500 in the battery 10. The insulation body 110 includes a first surface 111 and a second surface 112 that are opposite to each other. The first surface 111 is used to connect with the cover plate 300, and the second surface 112 is used to face the cell 500. That is, during the assembly of the battery 10, the insulation body 110 is located between the cover plate 300 and the cell 500 to prevent direct contact between the cell 500 and the cover plate 300, thereby facilitating the electrical connection or insulation design between the cell 500 and the cover plate 300.

The insulation structure 100 also includes a baffle 120. The baffle 120 is provided on at least one side of the insulation body 110 in the width direction Y. The baffle 120 is rotatably connected to the insulation body 110, and the rotation axis a of the baffle 120 extends in the length direction X of the insulation body 110. That is, the baffle 120 can be rotated towards the first surface 111 or the second surface 112 relative to the insulation body 110, in other words, the baffle 120 can be rotated towards the direction of approaching or moving away from the cell 500 relative to the insulation body 110. During the assembly of the battery 10, the cover plate 300 and the insulation body 110 are penetrated by the post 400. After the welding of the tabs 510 of the cell 500 and the post 400 is completed, the tabs 510 of the cell 500 will be bent. At this time, the baffle 120 is bent towards the direction of approaching the cell 500 relative to the insulation body 110, so that the baffle 120 is isolated between the tabs 510 of the cell 500 and the casing 200 of the battery 10, which can effectively prevent the tabs 510 from short-circuiting due to direct contact with the casing 200 of the battery 10 in a bent state, thereby ensuring the normal use of the battery 10.

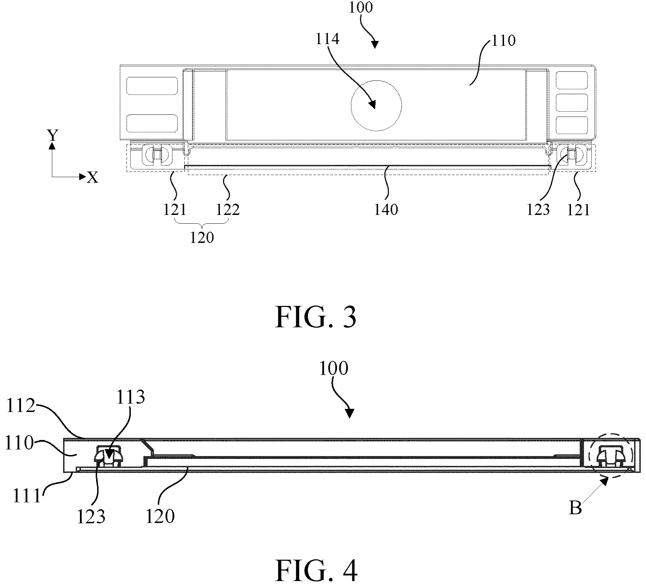

Herein, as shown in FIG. 3, the baffle 120 includes a baffle body 122 and a connecting portion 121 that are connected to each other. The baffle body 122 extends in the length direction X of the insulation body 110 to isolate the tabs 510 of the cell 500 from the casing 200 of the battery 10. The connecting portion 121 is rotatably connected to the insulation body 110. The baffle body 122 is separately provided from the insulation body 110. That is, the baffle 120 realizes the rotatable connection with the insulation body 110 through the connecting portion 121. The baffle body 122 used to isolate the tabs 510 of the cell 500 from the casing 200 of the battery 10 is completely separated from the insulation body 110. With this structural design, when the insulation structure 100 is applied to the battery 10 and the baffle 120 is rotated and bent towards the direction of approaching the cell 500 relative to the insulation body 110, no stress will be generated between the insulation body 110 and the baffle body 122. Moreover, compared to the connecting portion 121, the area of the baffle body 122 is larger, which helps to reduce the stress between the insulation body 110 and the baffle 120 as a whole, and also helps to reduce the stress generated when the tabs 510 of the cell 500 squeezes the baffle 120 in a bent state, thereby ensuring the structural stability of the insulation structure 100 during use.

It should be noted that since the tabs 510 of the cell 500 will be bent as a whole in one direction after being welded to the post 400, a baffle 120 can be provided only on the side corresponding to the bending direction of the tabs 510 of the cell 500 in the width direction Y of the insulation body 110 to achieve the isolation between the tabs 510 of the cell 500 and the casing 200 of the battery 10. Of course, depending on the different structures of the battery 10, baffles 120 can also be provided on two opposite sides in the width direction Y of the insulation body 110 at the same time to further reduce the risk of short circuits caused by contact between the tabs 510 of the cell 500 and the casing 200 of the battery 10. The specific arrangement of the baffle 120 can be selected and adjusted according to the actual design requirements, and no special restrictions are made herein.

The insulation structure 100 in the embodiments of the present disclosure includes an insulation body 110 and a baffle 120. The insulation body 110 is used to isolate the cover plate 300 from the cell 500 in the battery 10. The insulation body 110 includes a first surface 111 and a second surface 112 that are opposite to each other. The first surface 111 is used to connect with the cover plate 300, and the second surface 112 is used to face the cell 500. The baffle 120 is provided on at least one side of the insulation body 110 in the width direction Y. The baffle 120 is rotatably connected to the insulation body 110, with the rotation axis a of the baffle 120 extending in the length direction X of the insulation body 110. Herein, the baffle 120 includes a baffle body 122 and a connecting portion 121 that are connected to each other. The baffle body 122 extends in the length direction X of the insulation body 110 to isolate the tabs 510 of the cell 500 from the casing 200 of the battery 10. The connecting portion 121 is rotatably connected to the insulation body 110. The baffle body 122 is separately provided from the insulation body 110. The present disclosure, by providing a baffle 120 on at least one side of the insulation body 110 in the width direction Y and using the rotatable connection between the baffle 120 and the insulation body 110 to isolate the tabs 510 of the cell 500 from the casing 200 of the battery 10, reduces the risk of short circuits caused by contact between the tabs 510 of the cell 500 and the casing 200 of the battery 10 when the tabs 510 of the cell 500 is bent. At the same time, the present disclosure, by separating the baffle body 122 of the baffle 120 from the insulation body 110 and only using the connecting portion 121 to connect with the insulation body 110, can reduce the stress generated when the baffle 120 is bent relative to the insulation body 110, as well as the stress generated when the tabs 510 of the cell 500 squeezes the baffle 120 in a bent state, thereby helping to ensure the structural stability of the insulation structure 100 during use.

In some embodiments, the baffle 120 includes two connecting portions 121 arranged opposite to each other in the length direction X of the insulation body 110, and the baffle body 122 is connected between the two connecting portions 121. That is, the baffle body 122 realizes the connection with the insulation body 110 through the connecting portions 121 located at its ends. While reducing the stress generated when the baffle 120 is bent relative to the insulation body 110, as well as the stress generated when the tabs 510 of the cell 500 squeezes the baffle 120 in a bent state, it also helps to improve the connection stability between the baffle 120 and the insulation body 110, thereby further improving the structural stability of the insulation structure 100 as a whole during use.

Optionally, the baffle 120 has an unfolded position and a fastened position. When the baffle 120 is in the unfolded position, the baffle 120 can be located in the same plane as the insulation body 110, so that before the welding of the tabs 510 of the cell 500 and the post 400, the insulation structure 100 as a whole can be laid flat on the cover plate 300, which facilitates the welding of the tabs 510 of the cell 500 and the post 400. After the welding of the tabs 510 of the cell 500 and the post 400 is completed, the baffle 120 needs to be bent relative to the insulation body 110 to make the baffle 120 be in the fastened position. At this point, the baffle 120 forms an angle with the insulation body 110 (such as perpendicular), and the baffle 120 and the insulation body 110 are fastened to each other, which facilitates subsequent operations of entering the casing. At the same time, the bent baffle 120 can also isolate the tabs 510 of the cell 500 from the casing 200 of the battery 10 to prevent short circuits.

Herein, when the baffle 120 is rotated from the unfolded position to the fastened position, the baffle 120 is rotated towards the second surface 112 relative to the insulation body 110, that is, the baffle 120 is rotated towards the direction of approaching the cell 500 relative to the insulation body 110. When the baffle 120 is rotated from the fastened position to the unfolded position, the baffle 120 is rotated towards the first surface 111 relative to the insulation body 110, that is, the baffle 120 is rotated towards the direction of moving away from the cell 500 relative to the insulation body 110.

In some embodiments, when the baffle 120 is rotated to the fastened position, the side of the baffle body 122 facing the cover plate 300 is used to abut against the cover plate 300. That is, when the insulation structure 100 is applied to the battery 10 and the baffle 120 is in the fastened position after being bent, the side of the bent baffle body 122 facing the cover plate 300 directly abuts against the cover plate 300. The interaction force between the cover plate 300 and the baffle body 122 can reduce the risk of the baffle 120 being deformed under the squeezing force of the tabs 510 of the cell 500, thereby reducing the risk of short circuits caused by contact between the tabs 510 of the cell 500 and the casing 200 of the battery 10.

Herein, the height of the baffle 120 can be designed according to the height of the tabs 510 of the cell 500 after being bent, as long as the height of the baffle 120 is not less than the height of the tabs 510 of the cell 500 after being bent, and no special restrictions are made herein.

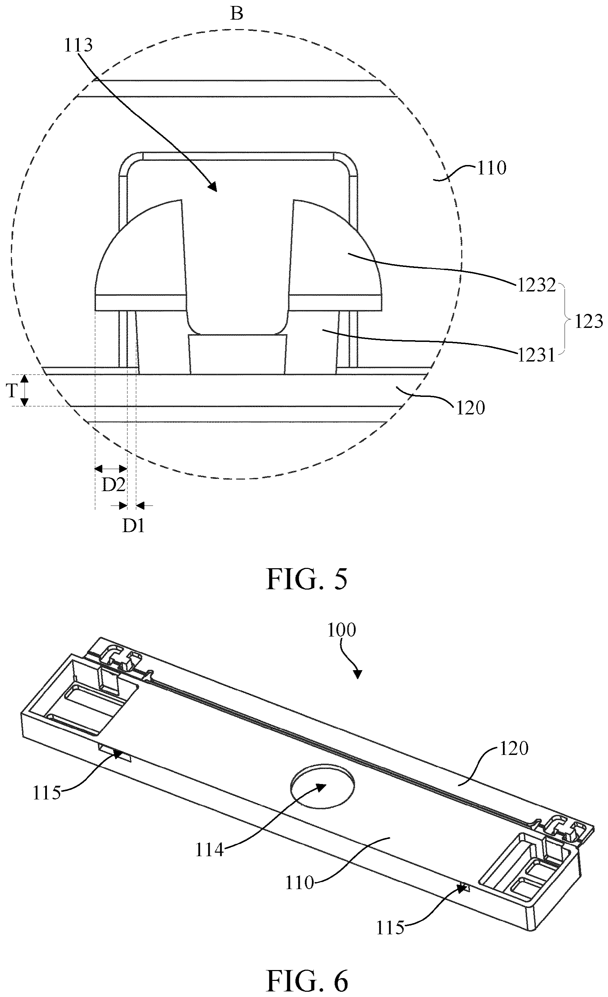

Optionally, as shown in FIGS. 4 and 5, a snap portion 123 is protruded on the surface of the baffle 120, and a snap groove 113 is provided on the side of the insulation body 110 facing the baffle 120 at the position corresponding to the snap portion 123. When the baffle 120 is rotated towards the second surface 112 relative to the insulation body 110 to the fastened position, the snap portion 123 is used to snap with the snap groove 113. That is, when the insulation structure 100 is applied to the battery 10, the baffle 120 will be rotated and bent towards the second surface 112 relative to the insulation body 110, and after the rotation, the snap portion 123 on the baffle 120 will snap into the snap groove 113 on the insulation body 110 to ensure the relative stability of the position of the baffle 120 after rotation and bending, and to prevent the baffle 120 from rebounding under the stress between the connecting portion 121 and the insulation body 110 or under the squeezing action of the tabs 510 of the cell 500, thereby ensuring the structural stability of the insulation structure 100 as a whole during use.

Herein, the snap portion 123 can be set on the connecting portion 121, or set on the baffle body 122, or set on both the connecting portion 121 and the baffle body 122. The specific setting position can be selected and adjusted according to the actual design requirements, as long as when the baffle 120 is in the fastened position, the snap portion 123 can be stably snapped with the snap groove 113 to ensure the structural stability of the insulation structure 100 as a whole, and no special restrictions are made herein.

It should be noted that the setting positions of the snap portion 123 and the snap groove 113 can be interchanged. That is, the snap portion 123 is set on the side of the insulation body 110 facing the connecting portion 121, and the snap groove 113 is correspondingly set on the surface of the baffle 120. The specific setting manner can be selected and adjusted according to the actual design requirements, and no special restrictions are made herein.

In some embodiments, the snap portion 123 includes a connecting sub-portion 1231 connected to the baffle 120, and two snap sub-portions 1232 connected to the side of the connecting sub-portion 1231 away from the baffle 120. The two snap sub-portions 1232 are spaced apart in the length direction X of the insulation body 110. When the baffle 120 is rotated towards the second surface 112 relative to the insulation body 110 to the fastened position, the snap sub-portions 1232 are used to snap with the snap groove 113. That is, during the process of the baffle 120 being rotated and bent towards the second surface 112 relative to the insulation body 110, when the two snap sub-portions 1232 come into contact with the side wall of the snap groove 113, they will deform towards each other under the action of the side wall of the snap groove 113. After the two snap sub-portions 1232 pass through the snap groove 113, they will bounce off in opposite directions under the action of the resilience force, thereby achieving the snapping of the two snap sub-portions 1232 with the snap groove 113.

In other embodiments, as shown in FIG. 5, in the width direction Y of the insulation body 110, the connecting sub-portion 1231 has a first orthographic projection on the insulation body 110. Two opposite sides of the first orthographic projection in the length direction X of the insulation body 110 are located within the snap groove 113. The distance D1 between the two opposite sides of the first orthographic projection in the length direction X of the insulation body 110 and the corresponding side walls of the snap groove 113 is less than or equal to 0.2mm. If the distance D1 is too large, it may lead to poor snapping effect between the snap sub-portions 1232 and the snap groove 113, making the snap sub-portions 1232 easy to detach from the snap groove 113 under external forces, thereby affecting the structural stability of the insulation structure 100 as a whole.

Specifically, during the actual manufacturing process, the distance D1 can be set to 0.05mm, 0.1mm, 0.15mm, or 0.2mm, etc. The specific value can be selected and adjusted according to the actual design requirements, as long as the effective snapping between the snap sub-portions 1232 and the snap groove 113 is ensured, and no special restrictions are made herein.

In yet some other embodiments, in the width direction Y of the insulation body 110, the sides of the two snap sub-portions 1232 that are away from each other have a second orthographic projection on the insulation body 110, and part of the second orthographic projection is located outside the snap groove 113. The ratio of the maximum value of the distance D2 between the part of the second orthographic projection located outside the snap groove 113 and the corresponding side walls of the snap groove 113 to the thickness T of the insulation body 110 is greater than or equal to 0.25 and less than or equal to 1. If the ratio is too large, it indicates that D2 is larger, that is, the protruding portion of the snap sub-portion 1232 is more, which may lead to the snap sub-portion 1232 being unable to snap into the snap groove 113; if the ratio is too small, it indicates that D2 is smaller, that is, the protruding portion of the snap sub-portion 1232 is less, which may lead to the snap sub-portion 1232 detaching from the snap groove 113 during use.

Specifically, in the actual manufacturing process, the ratio can be set to 0.25, 0.5, 0.75, or 1, etc. The specific value can be selected and adjusted according to the actual design requirements, as long as the effective snapping between the snap sub-portions 1232 and the snap groove 113 is ensured, and no special restrictions are made herein.

Herein, the outer surface of the snap sub-portion 1232 can be set as a cambered surface, and the snap sub-portion 1232 is spherical-like as a whole, which helps the snap sub-portion 1232 to pass through the side wall of the snap groove 113 smoothly and be snapped with the snap groove 113. Of course, the snap sub-portion 1232 can also be set in other shapes, as long as the snap sub-portion 1232 can snap with the snap groove 113 successfully, and no special restrictions are made herein.

Optionally, the baffle 120 and the insulation body 110 are integrally formed. A bending area 130 is formed at the connection between the connecting portion 121 and the insulation body 110. The maximum thickness of the bending area 130 is less than the thickness of the connecting portion 121, so that the connecting portion 121 is rotatably connected to the insulation body 110. That is to say, the baffle 120 and the insulation body 110 are an integral structure, and the bending area 130 is the thinning area between the baffle 120 and the insulation body 110. By setting the maximum thickness of the bending area 130 to be less than the thickness of the connecting portion 121, the baffle 120 can be rotated and bent relative to the insulation body 110 through the bending area 130, thereby achieving the isolation of the tabs 510 of the cell 500 from the casing 200 of the battery 10 by the baffle 120.

Herein, in addition to the thinning treatment, multiple through holes can also be provided at intervals in the bending area 130 to improve the bendability of the bending area 130. The specific setting manner can be selected and adjusted according to the actual design requirements, as long as the baffle 120 can be bent relative to the insulation body 110 through the bending area 130, and no special restrictions are made herein.

In some embodiments, as shown in FIG. 3, a reinforcing rib 140 is provided on the baffle body 122, and the reinforcing rib 140 extends in the length direction X of the insulation body 110. That is, a strip-shaped reinforcing rib 140 is protruded on the baffle body 122. Since the material of the baffle 120 itself is relatively soft and is prone to deformation during use, providing a reinforcing rib 140 on the baffle 120 can effectively prevent the baffle 120 from being bent during use and thus avoid affecting the entry of the insulation structure 100 into the casing.

In other embodiments, as shown in FIG. 6, an installation hole 114 is provided on the insulation body 110, and the installation hole 114 penetrates the insulation body 110 in the thickness direction Z of the insulation body 110. The installation hole 114 is used to install the post 400 of the battery 10. At least two grooves 115 are provided on one side of the insulation body 110 in the width direction Y, and the grooves 115 extend in the width direction Y of the insulation body 110. In the length direction X of the insulation body 110, the grooves 115 are distributed on two opposite sides of the installation hole 114. That is, the grooves 115 distributed on the two opposite sides of the installation hole 114 form an anti-vibration structure. During the use of the battery 10, when the post 400 is subjected to pressure, the anti-vibration structure can play a buffering role, thereby protecting the tabs 510 of the cell 500 from being damaged and ensuring the performance of the battery 10 in use.

Next, the embodiments of the present disclosure provide a battery, which includes an insulation structure. The specific structure of the insulation structure refers to the above embodiments. Since this battery adopts all the technical solutions of the above embodiments, it at least has all the beneficial effects brought by the technical solutions of the above embodiments, and will not be repeated one by one herein.

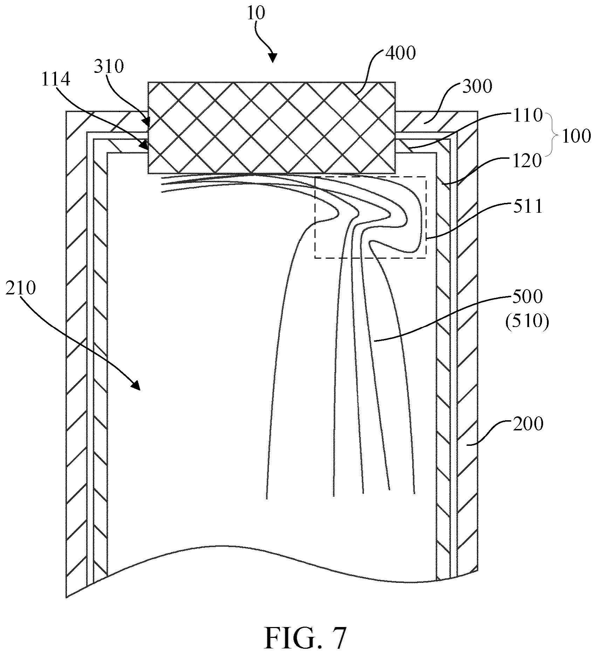

As shown in FIG. 7, the battery 10 includes a casing 200, a cover plate 300, an insulation structure 100, a post 400, and a cell 500. The casing 200 is configured with an accommodating cavity 210. The cover plate 300 is connected to the casing 200, and a through hole 310 communicating with the accommodating cavity 210 is provided on the cover plate 300. The insulation structure 100 is located on the side of the cover plate 300 facing the accommodating cavity 210, and the insulation structure 100 is connected to the cover plate 300. The baffle 120 in the insulation structure 100 is bent towards the accommodating cavity 210 relative to the insulation body 110. The post 400 is connected to the cover plate 300, and the post 400 sequentially passes through the through hole 310 and the installation hole 114 on the insulation body 110. The cell 500 is located inside the accommodating cavity 210, and the tabs 510 of the cell 500 is electrically connected to the post 400, and the tabs 510 of the cell 500 is located on the side of the baffle 120 away from the casing 200.

That is, during the assembly of the battery 10, the post 400 penetrates through the cover plate 300 and the insulation body 110. After the welding of the tabs 510 of the cell 500 and the post 400 is completed, the tabs 510 of the cell 500 will be bent. At this point, the baffle 120 is bent towards the direction of approaching the cell 500 relative to the insulation body 110, so that the baffle 120 is in the fastened position and is isolated between the tabs 510 of the cell 500 and the casing 200 of the battery 10, which can effectively prevent the tabs 510 of the cell 500 from short-circuiting due to direct contact with the casing 200 of the battery 10 in a bent state, thereby ensuring the normal use of the battery 10.

Herein, when the baffle 120 is bent towards the direction of approaching the cell 500 relative to the insulation body 110, the baffle 120 will squeeze the tabs 510 of the cell 500, causing the tabs 510 of the cell 500 to be dispersed under the squeezing action of the baffle 120. That is, the adjacent two cell tabs 510 are not in a closely attached state, to prevent the tabs 510 of the cell 500 from overheating due to excessive current. At the same time, under the squeezing action of the baffle 120, the tabs 510 of the cell 500 will protrude towards the baffle 120 and form a protruding portion 511. Since the tabs 510 of the cell 500 is in a dispersed state as a whole, the formation of the protruding portion 511 helps to increase the heat dissipation area of the tabs 510 of the cell 500, thereby improving the overall heat dissipation effect of the tabs 510 of the cell 500, further avoiding overheating due to excessive current, and thereby improving the performance of the battery 10 in use.

Specifically, as shown in FIGS. 1 to 3, the insulation structure 100 includes an insulation body 110 and a baffle 120. The insulation body 110 is used to isolate the cover plate 300 from the cell 500 in the battery 10. The insulation body 110 includes a first surface 111 and a second surface 112 that are opposite to each other, the first surface 111 is used to connect with the cover plate 300, and the second surface 112 is used to face the cell 500. The baffle 120 is provided on at least one side of the insulation body 110 in the width direction Y, and the baffle 120 is rotatably connected to the insulation body 110, with the rotation axis a of the baffle 120 extending in the length direction X of the insulation body 110. Herein, the baffle 120 includes a baffle body 122 and a connecting portion 121 that are connected to each other, the baffle body 122 extends in the length direction X of the insulation body 110 to isolate the tabs 510 of the cell 500 from the casing 200 of the battery 10, the connecting portion 121 is rotatably connected to the insulation body 110, and the baffle body 122 is separately provided from the insulation body 110.

The present disclosure, by providing a baffle 120 on at least one side of the insulation body 110 in the width direction Y and using the rotatable connection between the baffle 120 and the insulation body 110 to isolate the tabs 510 of the cell 500 from the casing 200 of the battery 10, reduces the risk of short circuits caused by contact between the tabs 510 of the cell 500 and the casing 200 of the battery 10 when the tabs 510 of the cell 500 is bent. At the same time, the present disclosure, by separating the baffle body 122 of the baffle 120 from the insulation body 110 and only using the connecting portion 121 to connect with the insulation body 110, can reduce the stress generated when the baffle 120 is bent relative to the insulation body 110, as well as the stress generated when the tabs 510 of the cell 500 squeezes the baffle 120 in a bent state, thereby helping to ensure the structural stability of the insulation structure 100 during use, and thereby ensuring the performance of the battery 10 in use.

## Claims

1. An insulation structure (100), comprising:
an insulation body (110), used to isolate a cover plate (300) from a cell (500) in a battery (10); the insulation body (110) including a first surface (111) and a second surface (112) that are opposite to each other, the first surface (111) used to connect with the cover plate (300), and the second surface (112) used to face the cell (500);
a baffle (120), provided on at least one side of the insulation body (110) in a width direction, the baffle (120) rotatably connected to the insulation body (110), and a rotation axis of the baffle (120) extending in a length direction of the insulation body (110);
wherein the baffle (120) includes a baffle body (122) and a connecting portion (121) that are connected to each other, the baffle body (122) extends in the length direction of the insulation body (110) to isolate tabs (510) of the cell (500) from a casing (200) of the battery (10), the connecting portion (121) is rotatably connected to the insulation body (110), and the baffle body (122) is separately provided from the insulation body (110).

2. The insulation structure (100) of claim 1, wherein the baffle (120) includes two connecting portions (121) arranged opposite to each other in the length direction of the insulation body (110), and the baffle body (122) is connected between the two connecting portions (121).

3. The insulation structure (100) of claim 1, wherein the baffle (120) has an unfolded position and a fastened position, when the baffle (120) is rotated from the unfolded position to the fastened position, the baffle (120) is rotated towards the second surface (112) relative to the insulation body (110), and when the baffle (120) is rotated from the fastened position to the unfolded position, the baffle (120) is rotated towards the first surface (111) relative to the insulation body (110).

4. The insulation structure (100) of claim 3, wherein when the baffle (120) is rotated to the fastened position, a side of the baffle body (122) facing the cover plate (300) is used to abut against the cover plate (300).

5. The insulation structure (100) of claim 3, wherein a snap portion (123) is protruded on a surface of the baffle (120), and a snap groove (113) is provided on a side of the insulation body (110) facing the baffle (120) at a position corresponding to the snap portion (123); when the baffle (120) is rotated towards the second surface (112) relative to the insulation body (110) to the fastened position, the snap portion (123) is used to snap with the snap groove (113).

6. The insulation structure (100) of claim 5, wherein an outer surface of the snap sub-portion (1232) is set as a cambered surface.

7. The insulation structure (100) of claim 5, wherein the snap portion (123) includes a connecting sub-portion (1231) connected to the baffle (120), and two snap sub-portions (1232) connected to a side of the connecting sub-portion (1231) away from the baffle (120), the two snap sub-portions (1232) are spaced apart in the length direction of the insulation body (110); when the baffle (120) is rotated towards the second surface (112) relative to the insulation body (110) to the fastened position, the snap sub-portions (1232) are used to snap with the snap groove (113).

8. The insulation structure (100) of claim 7, wherein in the width direction of the insulation body (110), the connecting sub-portion (1231) has a first orthographic projection on the insulation body (110), two opposite sides of the first orthographic projection in the length direction of the insulation body (110) are located within the snap groove (113), and a distance between the two opposite sides of the first orthographic projection in the length direction of the insulation body (110) and corresponding side walls of the snap groove (113) is less than or equal to 0.2mm.

9. The insulation structure (100) of claim 7, wherein in the width direction of the insulation body (110), sides of the two snap sub-portions (1232) that are away from each other have a second orthographic projection on the insulation body (110), part of the second orthographic projection is located outside the snap groove (113), and a ratio of a maximum value of a distance between the part of the second orthographic projection located outside the snap groove (113) and corresponding side walls of the snap groove (113) to a thickness of the insulation body (110) is greater than or equal to 0.25 and less than or equal to 1.

10. The insulation structure (100) of any one of claims 1 to 9, wherein the baffle (120) and the insulation body (110) are integrally formed.

11. The insulation structure (100) of claim 10, wherein a bending area (130) is formed at a connection between the connecting portion (121) and the insulation body (110), a maximum thickness of the bending area (130) is less than a thickness of the connecting portion (121), so that the connecting portion (121) is rotatably connected to the insulation body (110).

12. The insulation structure (100) of any one of claims 1 to 9, wherein a reinforcing rib (140) is provided on the baffle body (122), and the reinforcing rib (140) extends in the length direction of the insulation body (110).

13. The insulation structure (100) of any one of claims 1 to 9, wherein an installation hole (114) is provided on the insulation body (110), the installation hole (114) penetrates the insulation body (110) in a thickness direction of the insulation body (110), the installation hole (114) is used to install a post (400) of the battery (10); at least two grooves (115) are provided on one side of the insulation body (110) in the width direction, and the grooves (115) extend in the width direction of the insulation body (110); in the length direction of the insulation body (110), the grooves (115) are distributed on two opposite sides of the installation hole (114).

14. A battery (10), the battery (10) comprising:
a casing (200), configured with an accommodating cavity (210);
a cover plate (300), connected to the casing (200), and a through hole (310) communicating with the accommodating cavity (210) being provided on the cover plate (300);
the insulation structure (100) of any one of claims 1 to 13, the insulation structure (100) located on a side of the cover plate (300) facing the accommodating cavity (210), and the insulation structure (100) connected to the cover plate (300); the baffle (120) in the insulation structure (100) being bent towards the accommodating cavity (210) relative to the insulation body (110);
a post (400), connected to the cover plate (300), the post (400) sequentially passing through the through hole (310) and the installation hole (114) on the insulation body (110);
a cell (500), located inside the accommodating cavity (210), tabs (510) of the cell (500) electrically connected to the post (400), and the tabs (510) of the cell (500) located on a side of the baffle (120) away from the casing (200).

15. The battery (10) of claim 14, wherein the tabs (510) are in a dispersed state, and the tabs (510) protrude towards the baffle (120) and form a protruding portion (511).
